Europäisches Patentamt

European Patent Office

Office européen des brevets

(11) Veröffentlichungsnummer: **0 552 402 B1**

(12) **EUROPÄISCHE PATENTSCHRIFT**

(45) Veröffentlichungstag der Patentschrift: **11.01.95**

(21) Anmeldenummer: **92108993.4**

(22) Anmeldetag: **28.05.92**

(51) Int. Cl.6: **C04B 35/10**, C25C 3/08

(54) **Feuerfestes Material für Elektrolyseöfen, Verfahren zur Herstellung und Verwendung des feuerfesten Materials.**

(30) Priorität: **21.01.92 DE 4201490**

(43) Veröffentlichungstag der Anmeldung:
**28.07.93 Patentblatt 93/30**

(45) Bekanntmachung des Hinweises auf die
Patenterteilung:
**11.01.95 Patentblatt 95/02**

(84) Benannte Vertragsstaaten:
**AT BE CH DE DK ES FR GB GR IT LI LU MC
NL PT SE**

(56) Entgegenhaltungen:
**EP-A- 0 150 007
EP-A- 0 215 590
WO-A-83/03106
WO-A-85/01044**

**DATABASE WPIL Week 8710, Derwent Publications Ltd., London, GB; AN 87-068636 and
JP-A-62 021 769**

(73) Patentinhaber: **Dr. C. Otto Feuerfest GmbH
Postfach 51 01 09
D-44874 Bochum (DE)**

(72) Erfinder: **Becker,Wolfgang
Aderdamm 34
W-4000 Düsseldorf 1 (DE)**
Erfinder: **Brunk,Fred
Ulmenstr.34
W-432 Hattingen (DE)**

(74) Vertreter: **Patentanwälte Dr. Solf & Zapf
Postfach 13 01 13
D-42028 Wuppertal (DE)**

**Beschreibung**

Die Erfindung betrifft ein feuerfestes Material, insbesondere für Elektrolyseöfen, in denen durch Elektrolyse von in einer Fluoridschmelze gelöstem Aluminiumoxid metallisches Aluminium gewonnen wird. Die Erfindung betrifft ferner ein Verfahren zur Herstellung und die Verwendung des feuerfesten Materials.

Das Verfahren zur Herstellung von Aluminium durch Schmelzflußelektrolyse von in einer Fluoridschmelze gelöstem Aluminiumoxid ($Al_2O_3$) wird in Öfen durchgeführt, die im wesentlichen aus einer äußeren Stahlwanne mit einer wärmedämmenden Auskleidung und einer Kohlenstoffauskleidung bestehen. In der Kohlenstoffauskleidung sammelt sich das geschmolzene Aluminium, über dem sich die Fluoridschmelze befindet. Diese Badkomponenten sind sehr aggressiv, weshalb versucht wird, deren Reaktionen mit der wärmedämmenden Auskleidung zu verhindern. Welche Reaktionen möglich sind, wird z.B. in dem Buch von Morton Sorlie und Harald A. Oye "Cathodes in Aluminium Electrolysis", Aluminium-Verlag GmbH Düsseldorf, 1989, S. 95 bis 99, beschrieben. Im wesentlichen handelte es sich somit um den Angriff der Kryolithschmelze und deren gasförmigen Bestandteile sowie um den Angriff des schmelzflüssigen Aluminiums.

In Elektrolyseöfen zur Herstellung von Aluminium wird meist der gesamte Unterbau bzw. ein erheblicher Teil hiervon mit einer Schüttung aus reinem Aluminiumoxid zugestellt. Diese Schüttung nimmt im Laufe der Betriebszeit aufgrund der Einwirkung von fluoridhaltigen Gasen erheblich an Gewicht und insbesondere an Volumen zu, wobei sich insbesondere auch die Wärmebilanz ganz erheblich durch Wärmeverluste ändert. Im wesentlichen werden die folgenden Forderungen an eine Feuerfestauskleidung in Aluminium-Elektrolyseöfen gestellt:

1. Beständigkeit gegen Angriff von flüssigem Aluminium;
2. Beständigkeit gegen Angriff von Kryolith;
3. Sperrwirkung gegenüber fluorhaltigen Gasen;
4. Volumenstabilität;
5. Wärmeleitfähigkeit in der Größenordnung von konventionellen Schamottesteinen (etwa 1,2 bis 1,8 W/mK);
6. allenfalls geringfügige Änderung der Wärmeleitfähigkeit im Betrieb des Ofens;
7. Gehalt an Tonerdeoxid über 70 Gew.-% im Hinblick auf eine Weiterverwendung zur Erzeugung von Aluminium.

Für eine feuerfeste Steinauskleidung im Bereich unterhalb der als Kathode dienenden Kohlenstoffauskleidung sind - nach Priorität aufgeführt - die Punkte 2,3,4,6 und 5 von entscheidender Bedeutung. Im Hinblick auf das Recycling der Steine ist zusätzlich der Pkt. 7 erheblich. Eine Beständigkeit gegen Angriff von flüssigem Aluminium (Pkt. 1) ist für den Schmelzbadbereich maßgebend. Aufgrund der Einwirkung von fluorhaltigen Gasen zeigen marktgängige Feuerfestprodukte eine Volumenzunahme (Instabilität), woraus ein relativ schneller Verschleiß der gesamten Ofenanlage resultiert. Es kommt meist zu einer Verbiegung der Kathoden und verstärkten Angriff auf das Feuerfestmaterial unterhalb der Kathoden sowie mechanischer Zerstörung der Kohlenstoffauskleidung.

Die Aluminiumoxidschüttung erfüllt mit Ausnahme von Pkt. 7 die obigen Anforderungen nicht.

Aus der US-PS 3,078,173 ist bekannt, das Eindringen der Aluminiumschmelze in die feuerfeste, wärmeisolierende Auskleidung und eine Reaktion mit dem feuerfesten Material dadurch zu verhindern, daß die feuerfeste, wärmeisolierende Auskleidung aus gebranntem keramischem Material gebildet wird, das über 50 Gew.-% $Al_2O_3$ und 1 bis 30 Gew.-% eines Erdalkalioxids aufweist, wobei das Material keine Glasphase und weniger als 30% scheinbare Porosität haben soll. Als $Al_2O_3$-Komponente zur Herstellung des bekannten Materials kann Bauxit mit hohem $Al_2O_3$-Gehalt verwendet werden. Die Erdalkali- und $Al_2O_3$-Komponente soll im Kornaufbau 50% gröber als 105 $\mu$m (150 mesh) sein. Die Wirkung des Erdalkalioxids wird als unerklärlich beschrieben. Von Einflüssen fluorhaltiger Gase ist in dieser Veröffentlichung nichts ausgesagt.

Dokument WO-A-85 01 044 offenbart die Anwendung eines Verbundmaterials aus $Al_2O_3$ - $TiB_2$ in Elektrolysewannen bei der Elektrogewinnung von Aluminium.

In der DE-PS 31 16 273 wird zur Vermeidung des Eindringens von Badkomponenten und dessen Folgen vorgeschlagen, für die wärmeisolierende Auskleidung eine dicke Vulkanascheschicht und eine dünne Leckbarriere aus pulverförmiger Tonerde zwischen Vulkanascheschicht und Kohlenstoffauskleidung vorzusehen. Dieser Aufbau soll besonders preiswert sein. Die Leckbarriere soll die Ascheschicht abschirmen, kann aber die Penetration der Badkomponenten in die Ascheschicht nur verlangsamen. Demgemäß kann lediglich über die Dicke der Ascheschicht die Standzeit der Ofenauskleidung bestimmt werden, wobei eine dicke Schicht erst nach einer entsprechend langen Zeit durchdrungen werden kann. Die Druckschrift befaßt sich nicht mit dem Problem der Wirkung der fluorhaltigen Gase.

Gemäß US-PS 4,175,022 soll als Abschirmung für die feuerfeste Auskleidung ein Schichtelement, bestehend aus einer Graphitschicht aus expandiertem Graphit und einer Stahlschicht verwendet werden. Die Graphitschicht soll als Barriere für Kryolith und dessen Zersetzungsprodukte, außer für Natrium dienen, und die Stahlschicht soll letztlich lediglich noch natriumundurchlässig sein. Im Betrieb eines solchen Ofens kann jedoch nicht verhindert werden, daß fluorhaltige Gase mit der feuerfesten Auskleidung in Kontakt kommen und diese Auskleidung wie oben beschrieben, beschädigen.

Eine weitere bekannte Abschirmung gegen die Aluminiumschmelze und insbesondere gegen die flüssigen und gasförmigen Badkomponenten sieht eine Schicht aus Kalziumsilikaten und/oder Kalziumaluminatsilikaten vor; diese Stoffe sollen mit Natriumfluorid unter Bildung von Stoffen reagieren, die bei Elektrolysetemperaturen fest sind und kein Wasser absorbieren (EP-OS 0 102 361). Da die Reaktionen langsam ablaufen, ist zudem eine Metall- oder Glasschicht erforderlich, die das Eindringen der Badkomponenten oder der Aluminiumschmelze in die feuerfeste Auskleidung verhindern soll. Diese Abschirmung ist nicht ausreichend, weil bei Verbrauch der Schicht fluorhaltige Gase weiter in die tieferliegenden, feuerfesten Auskleidungsschichten dringen können.

Nach der US-PS 4,170,533 wird als Abschirmung eine Kruste aus ineinander verwachsenen und gegebenenfalls durch Schmelze verklebten nadelförmigen Korundkristallen durch Kühlung einer übersättigten Lösung gezüchtet. Die Herstellung der Kruste ist jedoch so aufwendig, daß dieser Vorschlag keine wirtschaftliche Verwertung hat finden können.

Aufgabe der Erfindung ist, ein feuerfestes, wärmedämmendes Material für Elektrolyseöfen der eingangs beschriebenen Art zu schaffen, das dem Angriff fluorhaltiger Gase widersteht und das einfach und preiswert herstellbar ist. Aufgabe der Erfindung ist ferner, ein Verfahren zur Herstellung und eine besondere Verwendung des Materials aufzuzeigen.

Diese Aufgaben werden durch die Merkmale der Ansprüche 1, 23 und 40 gelöst. Vorteilhafte Weiterbildungen der Erfindung werden in den von diesen Ansprüchen abhängigen Ansprüchen gekennzeichnet.

Nach der Erfindung wird zunächst ein poröses, feuerfestes, wärmedämmendes Material erzeugt durch Mischen mindestens eines gekörnten $Al_2O_3$-haltigen, insbesondere alumosilikatischen, feuerfesten Rohstoffs mit einem $Al_2O_3$-Gehalt von über 50 Gew.-% mit mindestens einem $TiO_2$-haltigen Rohstoff und gegebenenfalls Bindemittel, so daß eine bild- bzw. formbare Masse entsteht. Beispielsweise werden Schamotte, Korund, Andalusit, Bauxit, Kyanith, Sillimanit oder Recycling-Material aus Ofenauskleidungen z.B. eines Elektrolyseofens so zusammengestellt, daß 50 bis 97,5 Gew.-%, vorzugsweise 70 bis 85 Gew.-% $Al_2O_3$, in der trockenen Masse vorliegen. Zugemischt wird als $TiO_2$-Rohstoff Rutil, Anatas, Tialit und/oder andere Titanverbindungen, und zwar soviel, daß 2,5 bis 10 Gew.-%, vorzugsweise 4 bis 6 Gew.-% $TiO_2$, bezogen auf die trockene Masse, vorhanden sind.

Die Rohstoffe, die $Al_2O_3$ enthalten, werden zweckmäßigerweise mit folgender Kornverteilung zusammengestellt bzw. verwendet:

Kornaufbau: 0 bis 6 mm, vorzugsweise 0 bis 4 mm mit einer Kornverteilung von:

0 - 0,2 mm : 0 - 55 Gew.-% ; vorzugsweise: 20 - 45 Gew.-%

0,2 - 1 mm : 5 - 25 Gew.-% ; vorzugsweise: 12 - 20 Gew.-%

1 - 3 mm : 15 - 60 Gew.-% ; vorzugsweise: 25 - 35 Gew.-%

> 3 mm : 0 - 15 Gew.-% ; vorzugsweise: 1 - 10 Gew.-%

Die Rohstoffe, die $TiO_2$ enthalten, werden zweckmäßigerweise mit folgender Kornverteilung eingesetzt:

0 - 0,2 mm : 0 - 100 Gew.-%

0,2 - 1,0 mm : 0 - 30 Gew.-% ; vorzugsweise : 0 - 15 Gew.-%

1 - 3,0 mm : 15 - 45 Gew.-% ; vorzugsweise : 25 - 35 Gew.-%

> 3,0 mm : 0 - 15 Gew.-% ; vorzugsweise : 1 - 10 Gew.-%

Als Bindemittel können z.B. Tone, Sulfitablauge und Phosphate verwendet werden und davon jeweils nur soviel, wie zur Formgebung erforderlich ist.

Nach einer besonderen Ausführungsform der Erfindung werden natürliche, alumosilikatische Rohstoffe verwendet, die $TiO_2$-Gehalte von > 1 Gew,-% von Hause aus aufweisen. Sofern die Gehalte an $TiO_2$ und/oder $Al_2O_3$ nicht ausreichend sind, wird der noch fehlende Anteil der jeweiligen Komponente $Al_2O_3$ und/oder $TiO_2$ zugesetzt. Ist eine der Komponenten zu hoch konzentriert enthalten, wird mit der anderen Komponente entsprechend abgemagert. Ein besonders geeigneter Rohstoff, der beide Komponenten bereits von Hause aus enthält, ist Bauxit. Demgemäß wird bevorzugt refraktärer bzw. eisenarmer Bauxit verwendet.

Die aufbereitete Masse wird z.B. zu quaderförmigen Steinen geformt und die Steine getrocknet, so daß ein gut handhabbarer Rohling entsteht. Anschließend werden die Steine vorzugsweise gesintert bei Temperaturen zwischen 1200 und 1600 °C. Die auf diese Weise behandelten Steine haben eine scheinbare Porosität zwischen 10 bis 35 Vol.-%.

Nach einer Ausführungsform des erfindungsgemäßen Verfahrens zur Herstellung des feuerfesten, wärmedämmenden Materials werden die Steine nach dem Brennen mit einem fluorhaltigen Gas bei Temperaturen zwischen 700 und 1000°C, insbesondere zwischen 800 und 900°C derart behandelt, daß das Gas auch in die offenen Poren des Steins eindringen kann. Das Fluorgas, das vorzugsweise Natriumfluorid ist, initiiert die Bildung einer Vielzahl whiskerförmiger bzw. nadelförmiger $TiO_2$-Kristalle oder $TiO_2$-haltiger Kristalle, die in den freien Porenraum bzw. auf den Grenzflächen intergranularer Hohlräume wachsen und zwar in ihrer Ausrichtung regellos, so daß ein relativ dichtes, verfilztes Gerüst aus nadelförmigen $TiO_2$-Kristallen entsteht und den Porenraum relativ vollständig ausfüllt. Die Kristalle bestehen z.B. aus Rutil oder Tialit oder anderen $TiO_2$ enthaltenden Phasen.

In Abhängigkeit von dem $TiO_2$-Gehalt der Rohstoffe, der Einwirkdauer des fluorhaltigen Gases und dem zur Verfügung stehenden Porenraum kann eine Ausfüllung der Poren erwirkt werden, die die Gasdurchlässigkeit des Steins ganz erheblich reduziert. Beispielsweise weist ein feuerfester Stein vor der Behandlung eine Gasdurchlässigkeit von 42 nPerm und nach der Behandlung eine Gasdurchlässigkeit von 18 nPerm auf. Durch das verfilzte Gerüst im Porenraum wird auch das Eindringen von Schmelzphasen vermindert. Wesentlich ist, daß der Kristalldruck der wachsenden $TiO_2$-Kristalle nicht so groß ist, daß der Stein auseinandergesprengt wird. Konventionelle Schamottesteine ohne $TiO_2$-Zusatz zeigen unter Fluorgaseinwirkung eine Volumenexpansion in der Größenordnung von etwa 1 bis 4 Vol.-%, wobei ein Wachsen der Mullit-Kristalle in der Bindematrix ein Auseinanderschieben der in einer Schmalze eingebetteten Körner verursacht. Der erfindungsgemäße Stein erfährt dagegen keine merkliche Volumenexpansion, sondern er bleibt formstabil. Hinzu kommt, daß die Steinfestigkeit erhöht wird und trotz höherer Dichtigkeit die gute Wärmedämmung erhalten bleibt.

Es konnte festgestellt werden, daß das Steingefüge etwa 1,3 Gew.-% Fluor und etwa 0,7 Gew.-% Natrium aufnimmt. Von welchen Bestandteilen des Steins diese Stoffe aufgenommen werden, konnte bisher nicht ermittelt werden. Natriumfeldspat-Vertreter oder Kalziumfluorid, die sich üblicherweise bilden, sind nicht nachweisbar.

Die $TiO_2$-Kristalle bilden sich nicht nur im Innern der Steinstruktur, sondern auch auf der äußeren Oberfläche des Steins.

Die Fluorbehandlung kann zweckmäßigerweise schon während eines Brennzyklus der Steine, z.B. während der Abkühlphase, erfolgen. Der Effekt der $TiO_2$-Nadelbildung ist dann der gleiche.

Nach einer besonderen Ausführungsform der Erfindung wird die Fluorbehandlung in situ, d.h. im im Ofen eingebauten Zustand der ohne Fluorgaseinwirkung gebrannten Steine durchgeführt. Verwendet wird das aus der Kryolith-Schmelze stammende fluorhaltige Gas, das man in die Steine eindringen läßt, so daß die $TiO_2$-Nadelbildungerfolgt. Insofern zeigt die Erfindung einen im Vergleich zum Stand der Technik anderen Weg auf, die Fluorgasbeständigkeit zu erwirken, nämlich durch einen Stein hoher Porosität ohne Abschirmung gegen Gas, bei dem seine gewünschten Eigenschaften während des normalen Betriebs des Ofens eingestellt werden können, die er danach beibehält, wobei die gute Wärmedämmung nicht verlorengeht und die Auskleidung auch nicht z.B. durch Expansion der Steine zerstört wird.

Die Steine ohne Fluorbehandlung werden als wärmedämmende Auskleidungsbestandteile z.B. wie üblich eingebaut. Beim Anfahren des Ofens verhalten sie sich zunächst wie feuerfeste, wärmedämmende Steine nach dem Stand der Technik. Sobald das Fluorgas die Auskleidung mit dem erfindungsgemäßen feuerfesten wärmedämmenden Material erreicht, kann und soll es auf das Material einwirken und die $TiO_2$-Verfilzung auf allen freien Oberflächen in der Umgebung des vom fluorhaltigen Gas erreichten Material bilden. Die Verfilzung mindert die Gasdurchlässigkeit durch Erhöhung des Durchgangswiderstandes und führt überraschend zu einer Inertisierung des feuerfesten Materials, so daß die fluorhaltigen Gase keine schädigende Wirkung mehr haben.

Das erfindungsgemäße feuerfeste, wärmedämmende Material kann ohne weiteres rezykliert werden, indem es entweder dem Elektrolyseprozeß zugesetzt oder bei der Herstellung von neuem, erfindungsgemäßen feuerfesten, wärmedämmenden Material verwendet wird. Da das rezyklierte Material Fluor aufgenommen hat, eignet sich dieses Material besonders gut zur Herstellung neuer Steine, weil beim Brennen das Fluor gasförmig entweicht, aufgefangen und zur Kontaktierung mit $TiO_2$ enthaltendem $Al_2O_3$-Material wiederverwendet werden kann, so daß die Nadelbildung mit dem eigenen Fluorgehalt der Masse bewirkt werden kann. Das Fluor wird dabei - wie oben ausgeführt - wieder eingebunden, so daß insoweit Fluorgas, im Kreislauf geführt, unschädlich bleibt und auch seine Restwärme zur Bildung der Verfilzung ausgenutzt wird. Diese Verfahrensvariante mindert die Kosten einer Abgasreinigung und auch die der Wärmeerzeugung durch Wärmerückgewinnung. Auch $TiO_2$ geht dabei nicht verloren, weil es in den neuen Massen wiederverwendet wird und insofern ebenfalls im Kreislauf geführt wird.

Erfindungsgemäße feuerfeste, wärmedämmende Steine haben vorzugsweise eine Rohdichte zwischen 1,5 und 2,9 $g/cm^3$ und eine Druckfestigkeit zwischen 5 und 120 MPa, wobei die Druckfestigkeit mit der Rohdichte zunimmt. Die Wärmeleitfähigkeit beträgt zwischen 0,8 W/mK und 3,0 W/mK und die Gasdurchlässigkeit zwischen 2 und 100 nPerm, vorzugsweise bis höchstens 50 nPerm. Die Gasdurchlässigkeit kann z.B. auch durch die Auswahl des Kornaufbaues beeinflußt werden.

Die Verwendung von $TiO_2$-haltigem Bauxit zur Herstellung von geformten und gebrannten feuerfesten Steinen für Gefäße, in denen sekundäre Schmelzprozesse durchgeführt werden, und in denen sie auch mit Kryolith in Kontakt kommen können, ist bekannt (US-PS 3,078,173). Dabei wird Bauxit mit einem Erdalkalioxid oder einer Erdalkaliverbindung versetzt. $TiO_2$ gilt als Verunreinigung (US-PS, Sp. 3, Z. 70 bis 74). Bei dieser bekannten Verwendung des Bauxits bildet sich trotz Kontaktierung mit Kryolith das erfindungsgemäße Material nicht. Bauxit in Kombination mit Erdalkalioxid oder Erdalkaliverbindungen oder anderen Reaktionspartnern reagiert mit fluorhaltigen Gasen unter Bildung von Phasen, wie sie in der EP-OS 0 102 361 beschrieben werden. Die erfindungsgemäße $TiO_2$-Verfilzung ergibt sich dabei nicht. Die Bildung der Verfilzung wird offenbar durch die anderen Zusätze zum Bauxit gestört.

Das erfindungsgemäße feuerfeste Material kann - wie beschrieben - als geformter Stein eingesetzt werden. Verwendbar und gleichermaßen wirksam ist es aber auch als Granulat, insbesondere aber auch als Pulver, wobei diese Produkte zweckmäßigerweise vor ihrer Verwendung nicht mit fluorhaltigem Gas behandelt sind; die Behandlung erfolgt dann in situ.

Bei der Einwirkung des fluorhaltigen Gases verarmt die Matrix-Substanz an $TiO_2$; dieser Vorgang kann soweit gehen, daß die Matrix-Substanz nahezu $TiO_2$-frei wird.

Ein zweckmäßiger Aufbau eines Elektrolyseofens wird schematisch in der Zeichnung dargestellt. Es zeigen:

Fig. 1     schematisch einen Teil-Querschnitt durch einen Elektrolyseofen;

Fig. 2a     schematisch den Aufbau einer Kryolith-Sperrschicht in der Draufsicht;

Fig. 2b     schematisch den Aufbau einer Fluorgas-Sperrschicht aus erfindungsgemäßen Steinen in der Draufsicht;

Fig. 2c     schematisch die Schichten gemäß Fig. 2a und 2b aufeinandergeschichtet in der Unteransicht.

Fig. 3     Ein Rasterelektronenbild einer Pore im erfindungsgemäßen Material.

Der abgebildete Elektrolyseofen für die Herstellung von Aluminium weist eine Stahlwanne 1 auf, in der Kathoden 2 wie üblich angeordnet sind, die mit Kathodeneisen 3 zur Stromzuführung in Verbindung stehen, wobei die Kathodeneisen 3 einen Formsteinring 4 und die Wandung der Stahlwanne 1 durchgreifen. Der Formsteinring 4 umgibt die Kathoden 2 randlich, wobei ein Zwischenraum zwischen Kathoden 2 und Formsteinring 4 verbleibt und mit einer Kohlenstoffmasse 5 ausgefüllt ist. Zwischen Kohlenstoffmasse 5 und Stahlwannenwandung sind SiC-Platten 7 angeordnet, die bis zur Wannenöffnung reichen. Der Oberteil der Stahlwanne sowie deren Anordnung sind nicht dargestellt. Sie entsprechen üblichen Konstruktionen. Die Formsteine des Formsteinrings 4 weisen eine zu den Kathoden 2 abfallende Schrägfläche 5a, die parallel dazu auch in der Kohlenstoffmasse 5 vorhanden ist, so daß die Wannenauskleidung, die direkt mit der Aluminiumschmelze 6 und der Kryolithschmelze 7a in Berührung kommt, aus den Kathoden 2, der Kohlenstoffmasse 5 und den SiC-Platten 7 besteht. Die Kryolithschmelze 7a kann zudem mit einer $Al_2O_3$-Pulverschicht 8 abgedeckt sein.

Im Durchbruch 9 eines Formsteins des Formsteinrings 4 sind die verbleibenden Zwischenräume zweckmäßigerweise mit $Al_2O_3$-haltigem feuerfestem Pulver abgedichtet, das zwischen 18 bis 48 Gew.-% $Al_2O_3$ in seinen Bestandteilen aufweist.

Unmittelbar unter den Kathoden 2 befindet eine Ausgleichsschicht 9a aus feuerfestem Pulver, das etwa 18 bis 48 Gew.-% $Al_2O_3$ in seinen Bestandteilen enthält. Unter dieser Ausgleichsschicht 9a befindet sich eine Steinschicht 10 aus feuerfesten Steinen, die zwischen 18 bis 48 Gew.-% $Al_2O_3$ aufweisen und eine Resistenz gegen Kryolithschmelze aufweisen. Unter dieser Schicht 10 ist eine Steinschicht 11 angeordnet, die aus erfindungsgemäßem feuerfesten, wärmedämmenden Material besteht und als Fluorgassperre dient. Zweckmäßigerweise ist unter der Schicht 11 noch eine $Al_2O_3$-Pulverschicht 14 vorgesehen. Der Aufbau des abgebildeten Elektrolyseofens hält insbesondere durch die Verwendung der erfindungsgemäßen Steine länger stand als übliche Konstruktionen. Dabei ist noch von Vorteil, wenn die Steinformate der Schichten 10 und 11 so aufeinander abgestimmt sind, daß sich eine optimale Fugenabdeckung ergibt. Das Längenmaß der Steinformate der Schicht 11 sollte dabei das 1,5-fache des Längenmaßes der Steinformate der Schicht 10 betragen, das Breitenmaß der Steinformate der Schicht 11 das 2-fache des Breitenmaßes der Steinformate der Schicht 10 und das Dickenmaß der Steinformate der Schicht 11 sollte mehr als dem 1-fachen des Dickenmaßes der Steinformate der Schicht 10 entsprechen. Beispielsweise werden für die Schicht 10 Formate mit folgenden Abmessungen verwendet:

Länge 200 mm - Breite 100 mm - Dicke 40 mm

oder

Länge 100 mm - Breite 100 mm - Dicke 40 mm.

5

Die darauf abgestimmten Formate der Schicht 11 sind zweckmäßigerweise:
Länge 300 mm - Breite 200 mm - Dicke 64 mm
oder
Länge 200 mm - Breite 100 mm - Dicke 64 mm
oder
Länge 100 mm - Breite 100 mm - Dicke 64 mm.

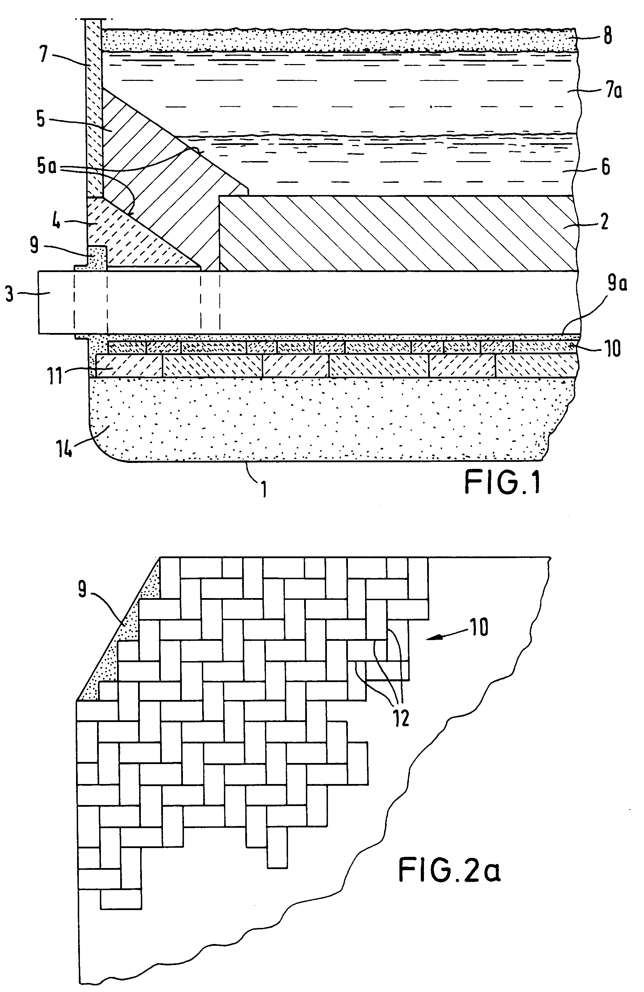

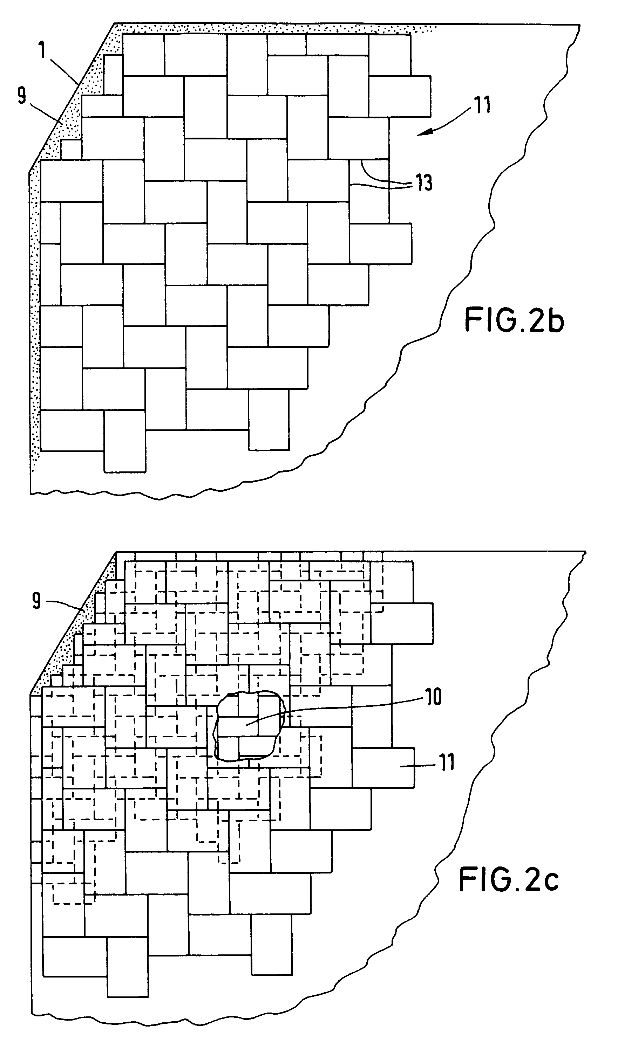

Insofern befinden sich in der Schicht 10 immer die nächstkleineren Steinformate. Die Steine werden - wie abgebildet - nach einem Z-Muster angeordnet, so daß die Steine der Schicht 11 - wie aus der Fig. 2c ersichtlich - nahezu vollständig die Fugen 12 der Schicht 10 abdecken. Dabei kreuzen die Fugen 13 die Schicht 11 lediglich die Fugen 12 der Schicht 10, so daß keine durchgehenden Fugen vorhanden sind.

Anhand der folgenden Beispiele wird die Erfindung näher erläutert, wobei insbesondere zweckmäßige Mischungen zur Herstellung der erfindungsgemäßen feuerfesten, wärmedämmenden Steine angegeben werden.

## Beispiel 1

| | | | | | | | |
|---|---|---|---|---|---|---|---|
| Bauxit | >= | | 3 | mm | : | 10 | Gew.-% |
| " | 1 | - | 3 | mm | : | 25 | Gew.-% |
| " | 0,2 | - | 1 | mm | : | 15 | Gew.-% |
| " | 0 | - | 0,2 | mm | : | 41 | Gew.-% |
| $TiO_2$ | 0 | - | 0,2 | mm | : | 1,5 Gew.-% (Anatas) |
| Bindeton | | | | | : | 7,5 Gew.-% |

## Beispiel 2

| | | | | | | | |
|---|---|---|---|---|---|---|---|
| Schamotte | >= | 3 | | mm | : | 15 | Gew.-% |
| " | 1 | - | 3 | mm | : | 8 | Gew.-% |
| " | 0,2 | - | 1 | mm | : | 10 | Gew.-% |
| " | 0 | - | 0,2 | mm | : | 20 | Gew.-% |

```
Andalusit   0,2 - 1    mm      :      10   Gew.-%

Bauxit      0   - 0,2 mm        :      25   Gew.-%

TiO₂        0   - 0,2 mm        :      4,5 Gew.-%    (Anatas)

Bindeton                        :      7,5 Gew.-%.
```

## Beispiel 3

```
Bauxit        >= 3     mm      :      10 Gew-%
  "        1  - 3      mm      :      25 Gew-%
  "        0,2 - 1     mm      :      15 Gew-%
  "        0  - 0,2 mm          :      42 Gew-%
TiO2       0  - 0,2 mm          :      0,5 Gew-%          (Anatas)
Bindeton                        :      7,5 Gew-%
```

## Beispiel 4 :

```
Korund        >= 3     mm      :       5 Gew-%
  "        1  - 3      mm      :      42,4 Gew-%
  "        0,2 - 1     mm      :      15 Gew-%
  "        0  - 0,2 mm          :      20 Gew-%
TiO2       0  - 0,2 mm          :      2,6 Gew-%          (Anatas)
Tonerde    0  - 0,2 mm          :      15 Gew-%
```

Das Mischen der Rohstoffkomponenten bei einer Wasserzugabe von 3,0 Gew.-% sowie 1,0 Gew.-% eines organischen Bindemittels erfolgte in einem Intensivmischer. Zweckmäßigerweise wurde das $TiO_2$ als letzte Rohstoffkomponente dem Mischprozeß beigegeben. Die Gesamtmischzeit betrug ca. 20 min.

Die Versatzmischungen wurden bei einem Preßdruck von ca. 50 bis 60 MPa zu Steinen verformt. Die erzielten Grünrohdichten lagen z.B. für Beispiel 1 bei ca. 2,68 g/cm³, für Beispiel 2 bei ca. 2,57 g/cm³. Nach einer Trocknung bei 110 °C bis zur Gewichtskonstanz (Heißluft) wurden die Steine bei 1.400 °C ca. 2 h gebrannt, die Aufheiz- und Abkühlgeschwindigkeit betrug ca. 35 °C/h.

Die chemisch-physikalisch-technologischen Eigenschaftswerte der gebrannten Steine stellen sich wie folgt dar:

| Merkmal | Beispiel 1 | Beispiel 2 | Beispiel 3 | Beispiel 4 |
|---|---|---|---|---|
| Rohdichte (g/cm³) | 2,55 | 2,41 | 2,56 | 3,14 |
| offene Porosität Vol% (*) | 24,8 | 20,1 | 23,2 | 20,3 |
| KDF (MPa) (**) | 28 | 32 | 32 | 34 |
| Gasdurchlässigkeit (***) (nPerm) | 42 | 28 | 34 | 8 |
| $Al_2O_3$ (Gew.-%) | 78,2 | 52,1 | 80,4 | 97,2 |
| $TiO_2$ (Gew.-%) | 4,5 | 5,3 | 3,6 | 2,6 |

(*) Wassersättigung im Vakuum
(**) KDF = Kaltdruckfestigkeit
(***) nach DIN 51058

Werkstoffmuster wurden mit fluorhaltigen Gasen beaufschlagt (Testbedingungen: "Fluoride Gas Resistance - Alilab/Sintef - Method").

Nach der Behandlung wurden an den Steinproben die folgenden Gewichts- und Volumenveränderungen sowie Gasdurchlässigkeiten und Druckfestigkeiten bei Raumtemperatur ermittelt:

| Beispiel 1: | |
|---|---|
| Gewichtszunahme | = 2,1 Gew.-% |
| Volumenzunahme | = 0,00 Vol-% |
| Gasdurchlässigkeit | = 18 nPerm |
| KDF | = 35 MPa |
| offene Porosität | = 22,5 Vol.-% |

| Beispiel 2: | |
|---|---|
| Gewichtszunahme | = 2,4 Gew.-% |
| Volumenzunahme | = 0,06 Vol.-% |
| Gasdurchlässigkeit | = 12 nPerm |
| KDF | = 38 MPa |
| offene Porosität | = 18 Vol.-% |

| Beispiel 3: | |
|---|---|
| Gewichtszunahme | = 1,7 Gew-% |
| Volumenzunahme | = + 0,07 Vol.-% |
| Gasdurchlässigkeit | = 18 nPerm |
| KDF | = 44 MPa |
| offene Porosität | = 21,5 Vol-% |

| Beispiel 4: | |
|---|---|
| Gewichtszunahme | = 1,2 Gew.-% |
| Volumenzunahme | = + 0,09 Vol.-% |
| Gasdurchlässigkeit | = 4 nPerm |
| KDF | = 42 MPa |
| offene Porosität | = 19,1 Vol.-% |

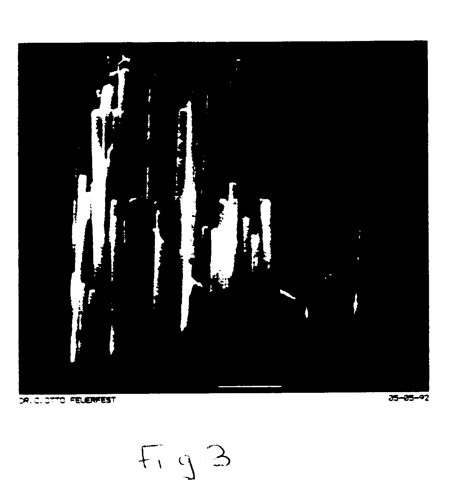

Zur Verdeutlichung der Struktur des Kristall-Verfilzung im erfindungsgemäßen, gegen fluorhaltige Gase bei den angegebenen Temperaturen resistenten, feuerfesten, wärmeisolierenden Materials zeigt Fig. 3 in Form einer photographischen Abbildung einen Blick in eine Pore in 6500-facher Vergrößerung. Aus der Abbildung ist erkennbar, daß und wie die $TiO_2$-Kristalle (weiße Nadeln) in den freien Porenraum gewachsen sind. Warum sich aus dieser Struktur eine Fluorgas-Resistenz ergibt, ist bis heute nicht geklärt.

**Patentansprüche**

1. Feuerfestes, poröses, gegen fluorhaltige Gase beständiges, volumenstabiles, wärmedämmendes Material, insbesondere in Form von geformten Steinen, für eine feuerfeste, wärmedämmende Auskleidung in Elektrolyseöfen, in denen durch Elektrolyse von in einer Fluoridschmelze gelöstem Aluminiumoxid metallisches Aluminium gewonnen wird, wobei
das Material einen $Al_2O_3$-Gehalt von über 50 Gew.-% und einen $TiO_2$-Gehalt von 2,5 bis 10 Gew.-% aufweist und bei Einwirkung von fluorhaltigen Gasen bei Temperaturen zwischen 700 und 1000°C im Bereich des vom Fluorgas beaufschlagten Materials auf den freien Oberflächen, insbesondere auf den Grenzflächen intergranularer Hohlräume nadelförmige, regellos in den Porenraum wachsende $TiO_2$-Kristalle und/oder $TiO_2$-haltige Kristalle bildet.

2. Material nach Anspruch 1,
dadurch **gekennzeichnet**,
daß der $Al_2O_3$-Gehalt 50 bis 97,5 Gew.-% beträgt.

3. Material nach Anspruch 2,
dadurch **gekennzeichnet**,
daß der $Al_2O_3$-Gehalt 70 bis 85 Gew.-% beträgt.

4. Material nach einem oder mehreren der Ansprüche 1 bis 3,
dadurch **gekennzeichnet**,
daß der $TiO_2$-Gehalt 4 bis 6 Gew.-% beträgt.

5. Material nach einem oder mehreren der Ansprüche 1 bis 4,
dadurch **gekennzeichnet**,
daß das Material keramisch gebrannt ist.

6. Material nach Anspruch 5,
dadurch **gekennzeichnet**,
daß das Material keramisch gesintert ist.

7. Material nach einem oder mehreren der Ansprüche 1 bis 6,
dadurch **gekennzeichnet**,
daß aus dem Material geformte Steine eine Porosität von 10 bis 35 Vol.% aufweisen.

8. Material nach Anspruch 7,
dadurch **gekennzeichnet**,
daß die daraus geformten Steine eine Porosität von 15 bis 30 Vol.-% aufweisen.

9. Material nach einem oder mehreren der Ansprüche 1 bis 8,
dadurch **gekennzeichnet**,
daß die aus dem Material geformten Steine eine Druckfestigkeit von 5 bis 120 MPa aufweisen.

10. Material nach Anspruch 9,
dadurch **gekennzeichnet**,
daß die aus dem Material geformten Steine eine Druckfestigkeit von 10 bis 60 MPa aufweisen.

11. Material nach einem oder mehreren der Ansprüche 1 bis 10,
dadurch **gekennzeichnet**,
daß die aus dem Material geformten Steine eine Wärmeleitfähigkeit von 0,8 bis 3,0 W/mK aufweisen.

12. Material nach Anspruch 11,
dadurch **gekennzeichnet**,
daß die aus dem Material geformten Steine eine Wärmeleitfähigkeit von 1,1 bis 2,2 W/mK aufweisen.

13. Material nach einem oder mehreren der Ansprüche 1 bis 12,
dadurch **gekennzeichnet**,
daß die aus dem Material geformten Steine eine Gasdurchlässigkeit von 2 bis 100 nPerm aufweisen.

14. Material nach Anspruch 13,
dadurch **gekennzeichnet**,
daß die aus dem Material hergestellten Steine eine Gasdurchlässigkeit von 10 bis 50 nPerm aufweisen.

15. Material nach einem oder mehreren der Ansprüche 1 bis 14,
dadurch **gekennzeichnet**,
daß in den Porenräumen aus dem Material herausgewachsene, miteinander verfilzte, gegebenenfalls durch eine Schmelzphase miteinander verkittete $TiO_2$-Kristalle bzw. $TiO_2$-haltigeKristalle vorhanden sind.

16. Material nach Anspruch 15,
dadurch **gekennzeichnet**,
daß die verfilzten Kristalle den Porenraum einer Pore nahezu vollständig ausfüllen, so daß sich z.B. eine Verringerung der Gasdurchlässigkeit von etwa 30 bis 60% ergibt, wobei die offene Porosität etwa erhalten bleibt.

17. Material nach Anspruch 15 und/oder 16,
    dadurch **gekennzeichnet**,
    daß zumindest Teilbereiche der Steine mit verfilzten $TiO_2$-Kristallen und/oder $TiO_2$-haltigen Kristallen abgedichtet sind.

18. Material nach einem oder mehreren der Ansprüche 15 bis 17,
    dadurch **gekennzeichnet**,
    daß die Kristalle Rutilkristalle sind.

19. Material nach einem oder mehreren der Ansprüche 15 bis 17,
    dadurch **gekennzeichnet**,
    daß die Kristalle Tialit-Kristalle sind.

20. Material nach einem oder mehreren der Ansprüche 15 bis 19,
    dadurch **gekennzeichnet**,
    daß mehrere Kristallphasen z.B. Kristalle aus Rutil, Tialit und/oder anderen $TiO_2$-haltigen, kristallinen Phasen vorhanden sind.

21. Material nach einem oder mehreren der Ansprüche 15 bis 20,
    dadurch **gekennzeichnet**,
    daß die die mit den verfilzten Kristallen ausgefüllten Poren umgebende Steinmatrix $TiO_2$-arm ist.

22. Material nach einem oder mehreren der Ansprüche 15 bis 20,
    dadurch **gekennzeichnet**,
    daß das die Poren umgebende Matrixmaterial der Steine $TiO_2$-frei ist.

23. Verfahren zur Herstellung eines feuerfesten, wärmedämmenden keramisch gebrannten Materials für die Auskleidung von Elektrolyseöfen indem durch Elektrolyse von einer Fluoridschmelze gelöstem Aluminiumoxid metallisches Aluminium gewonnen wird, insbesondere zur Herstellung von feuerfestem Material nach einem oder mehreren der Ansprüche 1 bis 22,
    dadurch **gekennzeichnet**,
    daß Rohstoffe zusammengestellt werden, die über 50 Gew.-% $Al_2O_3$ und 2,5 bis 10 Gew.-% $TiO_2$ enthalten, die Rohstoffe mit einem üblicherweise verwendeten Bindemittel gemischt, zu Steinen geformt, die Steine getempert und gegebenenfalls anschließend keramisch gebrannt werden.

24. Verfahren nach Anspruch 23,
    dadurch **gekennzeichnet**,
    daß die Steine gesintert werden.

25. Verfahren nach Anspruch 23 und/oder 24,
    dadurch **gekennzeichnet**,
    daß Rohstoffe verwendet werden, die einen $Al_2O_3$-Gehalt von 50 bis 97,5 Gew.-%, vorzugsweise von 70 bis 85 Gew.-% $Al_2O_3$ erbringen.

26. Verfahren nach einem oder mehreren der Ansprüche 23 bis 25,
    dadurch **gekennzeichnet**,
    daß die Rohstoffe zusammengestellt werden, die einen $TiO_2$-Gehalt von 4 bis 6 Gew.-% erbringen.

27. Verfahren nach einem oder mehreren der Ansprüche 23 bis 26,
    dadurch **gekennzeichnet**,
    daß Rohstoffe, die $Al_2O_3$ enthalten, mit folgender Kornverteilung zusammengestellt werden:
    0 - 0,2 mm : 0 - 55 Gew.-% ; vorzugsweise: 20 - 45 Gew.-%
    0,2 - 1 mm : 5 - 25 Gew.-% ; vorzugsweise: 12 - 20 Gew.-%
    1 - 3 mm : 15 - 60 Gew.-% ; vorzugsweise: 25 - 35 Gew.-%
    > 3 mm : 0 - 15 Gew.-% ; vorzugsweise: 1 - 10 Gew.-%

**28.** Verfahren nach einem oder mehreren der Ansprüche 23 bis 27,
dadurch **gekennzeichnet**,
daß Rohstoffe, die $TiO_2$ enthalten, mit folgender Kornverteilung zusammengestellt werden:
0 - 0,2 mm : 0 - 100 Gew.-%
0,2 - 1,0 mm : 0 - 30 Gew.-% ; vorzugsweise: 0 - 15 Gew.-%
1 - 3,0 mm : 15 - 45 Gew.-% ; vorzugsweise: 25 -35 Gew.-%
> 3,0 mm : 0 - 15 Gew.-% ; vorzugsweise: 1 -10 Gew.-%.

**29.** Verfahren nach einem oder mehreren der Ansprüche 23 bis 28,
dadurch **gekennzeichnet**,
daß als Bindemittel Phosphate verwendet werden und bei 600 bis 1000°C getempert oder bei 1.200 bis 1.600°C gebrannt wird.

**30.** Verfahren nach einem oder mehreren der Ansprüche 23 bis 28,
dadurch **gekennzeichnet**,
daß als Bindemittel Tone und/oder Sulfitablaugen verwendet werden.

**31.** Verfahren nach einem oder mehreren der Ansprüche 23 bis 30,
dadurch **gekennzeichnet**,
daß als Rohstoffe natürliche Rohstoffe verwendet werden, die $Al_2O_3$ und $TiO_2$ von Hause aus aufweisen.

**32.** Verfahren nach Anspruch 31,
dadurch **gekennzeichnet**,
daß refraktärer Bauxit verwendet wird.

**33.** Verfahren nach einem oder mehreren der Ansprüche 23 bis 32,
dadurch **gekennzeichnet**,
daß das keramische Brennen bzw. Sintern im Temperaturbereich zwischen 1200 und 1600°C durchgeführt wird.

**34.** Verfahren nach einem oder mehreren der Ansprüche 23 bis 33,
dadurch **gekennzeichnet**,
daß auf die gebrannten Steine bei Temperaturen zwischen 700 und 1000°C, insbesondere zwischen 800 und 900°C, mit einem fluorhaltigen Gas eingewirkt wird, und auf den für das Fluorgas zugängigen Oberflächen miteinander verfilzte, nadelförmige $TiO_2$- und/oder $TiO_2$-haltige Kristalle gebildet werden.

**35.** Verfahren nach Anspruch 34,
dadurch **gekennzeichnet**,
daß als fluorhaltiges Gas Natriumfluorid verwendet wird.

**36.** Verfahren nach Anspruch 34 oder 35,
dadurch **gekennzeichnet**,
daß die Einwirkung in situ in der Ofenauskleidung des Elektrolyseofens erfolgt.

**37.** Verfahren nach Anspruch 34 und/oder 35,
dadurch **gekennzeichnet**,
daß die Beaufschlagung mit Fluorgas nach dem Brennen der Steine durchgeführt wird.

**38.** Verfahren nach Anspruch 37,
dadurch **gekennzeichnet**,
daß die Beaufschlagung mit Fluorgas im keramischen Brennofen unmittelbar nach dem Brennen erfolgt.

**39.** Verfahren nach einem oder mehreren der Ansprüche 23 bis 38,
dadurch **gekennzeichnet**,
daß als Rohstoff für die $Al_2O_3$-Komponente zumindest anteilig ein erfindungsgemäßes Material verwendet wird, das als Recycling-Material aus einem Elektrolyseofen stammt.

**40.** Elektrolysewanne zur Herstellung von metallischem Aluminium durch Elektrolyse von in einer Fluoridschmelze gelöstem Aluminiumoxid,

**gekennzeichnet** durch

eine wärmedämmende, gegen Fluorgas beständige Auskleidung mit einem schichtweisen Aufbau aus mindestens zwei Schichten (10 und 11) aus feuerfesten, keramisch gebrannten wärmedämmenden Steinen, wobei die Schicht 10 eine Schmelzen-Sperrschicht ist und die Schicht 11 aus Steinen gemäß einem oder mehreren der Ansprüche 1 bis 22 besteht, die vorzugsweise nach einem Verfahren gemäß einem oder mehreren der Ansprüche 23 bis 39 hergestellt sind.

**41.** Elektrolysewanne nach Anspruch 40,

dadurch **gekennzeichnet**,

daß die Schichten (10,11) unterhalb der Kathoden angeordnet sind und die Schicht (11) die Fugen der Schicht (10) weitestgehend abdeckt.

**42.** Elektrolysewanne nach Anspruch 40 und/oder 41,

dadurch **gekennzeichnet**,

daß die feuerfesten Steine der Steinschicht (10) etwa 18 bis 48 Gew.-% $Al_2O_3$ aufweisen und resistent gegen Kryolith- und Aluminiumschmelze sind.

**43.** Elektrolysewanne nach einem oder mehreren der Ansprüche 40 bis 42,

dadurch **gekennzeichnet**,

daß das Längenmaß der Steinformate der Schicht (11) das 1,5-fache des Längenmaßes der Steinformate der Schicht (10) beträgt,

das Breitenmaß der Steinformate der Schicht (11) das 2-fache des Breitenmaßes der Steinformate der Schicht (10) beträgt und

das Dickenmaß der Steinformate der Schicht (11) mehr als dem 1-fachen des Dickermaßes der Steinformate der Schicht (10) entspricht,

wobei die Steine nach einem Z-Muster angeordnet sind, so daß die Fugen (12) der Schicht (10) abgedeckt sind und die Fugen (13) der Schicht (11) lediglich die Fugen (12) der Schicht (10) kreuzen.

**44.** Elektrolysewanne nach einem oder mehreren der Ansprüche 40 bis 43,

dadurch **gekennzeichnet**,

daß die Schicht (10) Steinformate mit folgenden Abmessungen aufweist:

Länge 200 mm - Breite 100 mm - Dicke 40 mm

oder

Länge 100 mm - Breite 100 mm - Dicke 40 mm

und die Schicht (11) Steinformate mit folgenden Abmessungen hat:

Länge 300 mm - Breite 200 mm - Dicke 64 mm

oder

Länge 200 mm - Breite 100 mm - Dicke 64 mm

oder

Länge 100 mm - Breite 100 mm - Dicke 64 mm,

wobei die Steine nach einem Z-Muster angeordnet sind, so daß die Fugen (12) der Schicht (10) abgedeckt sind und die Fugen (13) der Schicht (11) lediglich die Fugen (12) der Schicht (10) kreuzen.

**Claims**

**1.** Porous, refractory, thermally-insulating material resistant to gases containing fluorine and stable in volume, in particular in the form of shaped bricks for a refractory, thermally-insulating lining in electrolytic cells in which metallic aluminium is obtained by electrolysis of aluminium oxide dissolved in molten fluoride, the material having an $Al_2O_3$ content of above 50 wt.% and a $TiO_2$ content of 2.5 to 10 wt.% and forming acicular $TiO_2$ crystals and/or crystals containing $TiO_2$ which grow randomly in the pore space at temperatures of between 700 and 1000°C under the action of gases containing fluorine on the bare surfaces of the area of the material exposed to the fluorine gas, in particular on the interfaces of intergranular cavities.

**2.** Material according to claim 1,

characterised in that

12

the $Al_2O_3$ content is 50 to 97.5 wt.%.

3. Material according to claim 2,
characterised in that
the $Al_2O_3$ content is 70 to 85 wt.%.

4. Material according to one or more of claims 1 to 3,
characterised in that
the $TiO_2$ content is 4 to 6 wt.%.

5. Material according to one or more of claims 1 to 4,
characterised in that
the material is fired ceramically.

6. Material according to claim 5,
characterised in that
the material is sintered ceramically.

7. Material according to one of more of claims 1 to 6,
characterised in that
bricks shaped from the material have a porosity of 10 to 35 vol.%.

8. Material according to claim 7,
characterised in that
bricks shaped therefrom have a porosity of 15 to 30 vol.%.

9. Material according to one or more of claims 1 to 8,
characterised in that
bricks shaped from the material have a compressive strength of 5 to 120 MPa.

10. Material according to claim 9,
characterised in that
bricks shaped from the material have a compressive strength of 10 to 60 MPa.

11. Material according to one or more of claims 1 to 10,
characterised in that
bricks shaped from the material have a thermal conductivity of 0.8 to 3.0 W/mK.

12. Material according to claim 11,
characterised in that
bricks shaped from the material have a thermal conductivity of 1.1 to 2.2 W/mK.

13. Material according to one or more of claims 1 to 12,
characterised in that
bricks shaped from the material have a gas permeability of 2 to 100 nPerm.

14. Material according to claim 13,
characterised in that
bricks made from the material have a gas permeability of 10 to 50 nPerm.

15. Material according to one or more of claims 1 to 14,
characterised in that
there are present in the pore spaces $TiO_2$ crystals or crystals containing $TiO_2$ which have grown out of
the material, are matted together and optionally cemented together by a fused phase.

16. Material according to claim 15,
characterised in that
the matted crystals virtually completely fill the pore space of a pore, such that a reduction in gas permeability of, for example, 30 to 60% results, the open porosity being approximately retained.

17. Material according to claim 15 and/or 16,
characterised in that
at least some areas of the bricks are sealed with $TiO_2$ crystals or crystals containing $TiO_2$.

18. Material according to one or more of claims 15 to 17,
characterised in that
the crystals are rutile crystals.

19. Material according to one or more of claims 15 to 17,
characterised in that
the crystals are tialite crystals.

20. Material according to one or more of claims 15 to 19,
characterised in that
more than one crystal phase is present, for example crystals of rutile, tialite and/or other crystalline phases containing $TiO_2$.

21. Material according to one or more of claims 15 to 20,
characterised in that
the brick matrix surrounding the pores filled with matted crystals contains little $TiO_2$.

22. Material according to one or more of claims 15 to 20,
characterised in that
the matrix material of the bricks contains no $TiO_2$.

23. Process for the production of a refractory, thermally insulating, ceramically fired material for lining electrolytic cells in which metallic aluminium is obtained from aluminium oxide dissolved in molten fluoride, in particular for the production of a refractory material according to one or more of claims 1 to 22,
characterised in that
raw materials are combined which contain more than 50 wt.% $Al_2O_3$ and 2.5 to 10 wt.% of $TiO_2$, the raw materials are mixed with a customarily used binder, shaped into bricks, the bricks annealed and optionally subsequently ceramically fired.

24. Process according to claim 23,
characterised in that
the bricks are sintered.

25. Process according to claim 23 and/or 24,
characterised in that
raw materials are used which provide an $Al_2O_3$ content of 50 to 97.5 wt.%, preferably of 70 to 85 wt.%, $Al_2O_3$.

26. Process according to one or more of claims 23 to 25,
characterised in that
the raw materials combined are those providing a $TiO_2$ content of 4 to 6 wt.%.

27. Process according to one or more of claims 23 to 26,
characterised in that
raw materials containing $Al_2O_3$ with the following grain distribution are combined
0 - 0.2 mm: 0 - 55 wt.%; preferably: 20 - 45 wt.%
0.2 - 1 mm: 5 - 25 wt.%; preferably: 12 - 20 wt.%
1 - 3 mm: 15 - 60 wt.%; preferably: 25 - 35 wt.%
> 3 mm: 0 - 15 wt.%; preferably: 1 - 10 wt.%

**28.** Process according to one or more of claims 23 to 27,
characterised in that
raw materials containing $TiO_2$ with the following grain distribution are combined
0 - 0.2 mm: 0 - 100 wt.%
0.2 - 1.0 mm: 0 - 30 wt.%; preferably: 0 - 15 wt.%
1 - 3.0 mm: 15 - 45 wt.%; preferably: 25 - 35 wt.%
> 3.0 mm: 0 - 15 wt.%; preferably: 1 - 10 wt.%.

**29.** Process according to one or more of claims 23 to 28,
characterised in that
phosphates are used as binder and annealing is performed at 600 to 1000 °C or firing at 1,200 to 1,600 °C.

**30.** Process according to one or more of claims 23 to 28,
characterised in that
clays and/or sulphite liquors are used as binder.

**31.** Process according to one or more of claims 23 to 30,
characterised in that
the raw materials used are natural raw materials which contain $Al_2O_3$ and $TiO_2$ from the outset.

**32.** Process according to claim 31,
characterised in that
refractory bauxite is used.

**33.** Process according to one or more of claims 23 to 32,
characterised in that
ceramic firing or sintering is performed in the temperature range between 1200 and 1600 °C.

**34.** Process according to one or more of claims 23 to 33,
characterised in that
the fired bricks are treated with a gas containing fluorine at a temperature of 700 to 1000 °C, in particular between 800 and 900 °C and matted, acicular $TiO_2$ crystals and/or crystals containing $TiO_2$ are formed on the surfaces accessible to the fluorine gas.

**35.** Process according to claim 34,
characterised in that
sodium fluoride is used as the gas containing fluorine.

**36.** Process according to claim 34 or 35,
characterised in that
the treatment proceeds in situ in the furnace lining of the electrolytic cell.

**37.** Process according to claim 34 and/or 35,
characterised in that
that the exposure to fluorine gas is performed after firing the bricks.

**38.** Process according to claim 37,
characterised in that the exposure to fluorine gas is performed in the ceramics firing furnace immediately after firing.

**39.** Process according to one or more of claims 23 to 38,
characterised in that
at least a proportion of the raw material used for the $Al_2O_3$ component is a material according to the invention originating as a recycled material from an electrolytic cell.

**40.** Electrolytic tank for the production of metallic aluminium by electrolysis of aluminium oxide dissolved in molten fluoride,

15

characterised by
a thermally insulating lining resistant to fluorine gas with a layered structure of at least two layers (10 and 11) of refractory, ceramically fired, thermally insulating bricks, layer 10 being a melt barrier layer and layer 11 consisting of bricks according to one or more of claims 1 to 22, which are preferably produced using a process according to one or more of claims 23 to 39.

41. Electrolytic tank according to claim 40,
characterised in that
layers (10, 11) are arranged beneath the cathodes and layer (11) as far as possible covers the joints of layer (10).

42. Electrolytic tank according to claim 40 and/or 41,
characterised in that
the refractory bricks of the brick layer (10) contain approximately 18 to 48 wt.% $Al_2O_3$ and are resistant to molten cryolite and aluminium.

43. Electrolytic tank according to one or more of claims 40 to 42,
characterised in that
the length of the brick format of layer (11) is 1.5 times the length of the brick format of layer (10),
the width of the brick format of layer (11) is twice the width of the brick format of layer (10) and
the thickness of the brick format of layer (11) is more than once the thickness of the brick format of layer (10), the bricks being arranged in a Z pattern, such that the joints (12) of layer (10) are covered and the joints (13) of layer (11) merely cross the joints (12) of layer (10).

44. Electrolytic tank according to one or more of claims 40 to 43,
characterised in that
layer (10) has a brick format of the following dimensions:
length: 200 mm - width 100 mm - thickness 40 mm
or
length: 100 mm - width 100 mm - thickness 40 mm
and layer (11) has a brick format of the following dimensions
length 300 mm - width 200 mm - thickness 64 mm
or
length 200 mm - width 100 mm - thickness 64 mm
or
length 100 mm - width 100 mm - thickness 64 mm,
the bricks being arranged in a Z pattern, such that the joints (12) of layer (10) are covered and the joints (13) of layer (11) merely cross the joints (12) of layer (10).

## Revendications

1. Matériau réfractaire, poreux, résistant aux gaz fluorés, stable en volume, isolant thermique, notamment présenté sous la forme de briques moulées, destiné à former un revêtement réfractaire isolant thermique dans des fours d'électrolyse dans lesquels on élabore de l'aluminium métallique par électrolyse d'oxyde d'aluminium dissous dans un bain de fluorure, dans lequel le matériau possède une teneur en $Al_2O_3$ de plus de 50 % en poids et une teneur en $TiO_2$ de 2,5 à 10% en poids et, sous l'action de gaz fluorés, à des températures situées entre 700 et 1 000°C, forme, dans la région du matériau subissant l'action du fluor gazeux, et sur les surfaces libres, notamment sur les surfaces limites des cavités intergranulaires, des cristaux en aiguilles de $TiO_2$ et/ou contenant du $TiO_2$ qui croissent de façon aléatoire dans l'espace libre des pores.

2. Matériau selon la revendication 1, caractérisé en ce que la teneur en $Al_2O_3$ est de 50 à 97,5 % en poids.

3. Matériau selon la revendication 2, caractérisé en ce que la teneur en $Al_2O_3$ est de 70 à 85% en poids.

4. Matériau selon une ou plusieurs des revendications 1 à 3, caractérisé en ce que la teneur en $TiO_2$ est de 4 à 6 % en poids.

5. Matériau selon une ou plusieurs des revendications 1 à 4, caractérisé en ce que le matériau est cuit par un procédé céramique.

6. Matériau selon la revendication 5, caractérisé en ce que le matériau est fritté selon on procédé céramique.

7. Matériau selon une ou plusieurs des revendications 1 à 6, caractérisé en ce que des briques moulées à partir de ce matériau possèdent une porosité de 10 à 35 % en volume.

8. Matériau selon la revendication 7, caractérisé en ce que les briques moulées à partir de ce matériau possèdent une porosité de 15 à 30 % en volume.

9. Matériau selon une ou plusieurs des revendications 1 à 8, caractérisé en ce que les briques moulées à partir de ce matériau possèdent une résistance à la compression de 5 à 120 MPa.

10. Matériau selon la revendication 9, caractérisé en ce que les briques moulées à partir de ce matériau possèdent une résistance à la compression de 10 à 60 MPa.

11. Matériau selon une ou plusieurs des revendications 1 à 10, caractérisé en ce que les briques moulées à partir de ce matériau possèdent une conductibilité thermique de 0,8 à 3,0 W/mK.

12. Matériau selon la revendication 11, caractérisé en ce que les briques moulées à partir de ce matériau possèdent une conductibilité thermique de 1,1 à 2,2 W/mK.

13. Matériau selon une ou plusieurs des revendications 1 à 12, caractérisé en ce que les briques moulées à partir de ce matériau possèdent une perméabilité au gaz de 2 à 100 nPerm.

14. Matériau selon la revendication 13, caractérisé en ce que les briques produites à partir de ce matériau possèdent une perméabilité aux gaz de 10 à 50 nPerm.

15. Matériau selon une ou plusieurs des revendications 1 à 14, caractérisé en ce que, dans les espaces libres des pores, on trouve des cristaux de $TiO_2$ ou des cristaux contenant du $TiO_2$, formés par croissance à partir du matériau, feutrés les uns avec les autres, éventuellement cimentés les uns aux autres par une phase fondue.

16. Matériau selon la revendication 15, caractérisé en ce que les cristaux feutrés remplissent presque entièrement l'espace libre d'un pore, de sorte qu'il en résulte, par exemple, une diminution de la perméabilité, aux gaz d'environ 30 à 60 %, la porosité ouverte restant à peu près conservée.

17. Matériau selon la revendication 15 et/ou 16, caractérisé en ce qu'au moins des régions partielles des briques sont obturées par des cristaux de $TiO_2$ et/ou des cristaux contenant du $TiO_2$, qui sont feutrés.

18. Matériau selon une ou plusieurs des revendications 15 à 17, caractérisé en ce que les cristaux sont des cristaux de rutile.

19. Matériau selon une ou plusieurs des revendications 15 à 17, caractérisé en ce que les cristaux sont des cristaux de tialite.

20. Matériau selon une ou plusieurs des revendications 15 à 19, caractérisé en ce qu'on y trouve plusieurs phases cristallines, par exemple des cristaux de rutile, de tialite et/ou d'autres phases cristallines contenant du $TiO_2$.

21. Matériau selon une ou plusieurs des revendications 15 à 20, caractérisé en ce que la matrice de la brique qui entoure les pores remplis de cristaux feutrés est pauvre en $TiO_2$.

**22.** Matériau selon une ou plusieurs des revendications 15 à 20, caractérisé en ce que le matériau de matrice des briques qui entoure les pores est exempt de $TiO_2$.

**23.** Procédé de fabrication d'un matériau réfractaire isolant thermique, cuit par un procédé céramique, destiné au revêtement des fours d'électrolyse dans lesquels on élabore de l'aluminium métallique par électrolyse d'un oxyde d'aluminium dissous dans un bain fondu de fluorure, notamment destiné à la fabrication d'un matériau réfractaire selon une ou plusieurs des revendications 1 à 22, caractérisé en ce qu'on réunit des matières premières qui contiennent plus de 50 % de poids de $Al_2O_3$ et de 2,5 à 10 % en poids de $TiO_2$, on mélange les matières premières avec un liant utilisé habituellement, on les moule en forme de briques, on étuve les briques et, éventuellement, on les cuit ensuite par un procédé céramique.

**24.** Procédé selon la revendication 23, caractérisé en ce qu'on fritte les briques.

**25.** Procédé selon la revendication 23 et/ou 24, caractérisé en ce qu'on utilise des matières premières qui donnent une teneur en $Al_2O_3$ de 50 à 97,5 % en poids, de préférence de 70 à 85 % en poids de $Al_2O_3$.

**26.** Procédé selon une ou plusieurs des revendications 23 à 25, caractérisé en ce qu'on réunit des matières premières qui donnent une teneur en $TiO_2$ de 4 à 6 % en poids.

**27.** Procédé selon une ou plusieurs des revendications 23 à 26, caractérisé en ce qu'on réunit des matières premières qui contiennent de l'$Al_2O_3$ avec la distribution granulométrique suivante :
0 à 0,2 mm : 0 à 55 % en poids ; de préférence 20 à 45 % en poids
0,2 à 1 mm : 5 à 25 % en poids ; de préférence 12 à 20 % en poids
1 à 3 mm : 15 à 60 % en poids ; de préférence 25 à 35 % en poids
> 3 mm : 0 à 15 % en poids ; de préférence 1 à 10 % en poids.

**28.** Procédé selon une ou plusieurs des revendications 23 à 27, caractérisé en ce que les matières premières qui contiennent du $TiO_2$ sont réunies avec la distribution granulométrique suivante :
0 à 0,2 mm : 0 à 100 % en poids
0,2 à 1,0 mm : 0 à 30 % en poids ; de préférence 0 à 15 % en poids
1 à 3,0 mm : 15 à 45 % en poids ; de préférence 25 à 35 % en poids
> 3,0 mm : 0 à 15 % en poids ; de préférence 1 à 10 % en poids.

**29.** Procédé selon une ou plusieurs des revendications 23 à 28, caractérisé en ce qu'on utilise des phosphates en tant que liants et qu'on étuve à une température de 600 à 1 000 ° C ou qu'on cuit à une température de 1 200 à 1600 ° C.

**30.** Procédé selon une ou plusieurs des revendications 23 à 28, caractérisé en ce qu'on utilise comme liants des argiles et/ou lessives résiduaires au sulfite.

**31.** Procédé selon une ou plusieurs des revendications 23 à 30, caractérisé en ce qu'on utilise comme matières premières des matières premières naturelles qui contiennent $Al_2O_3$ et $TiO_2$ à leur état d'origine.

**32.** Procédé selon la revendication 31, caractérisé en ce qu'on utilise de la bauxite réfractaire.

**33.** Procédé selon une ou plusieurs des revendications 23 à 32, caractérisé en ce que la cuisson ou le frittage par un procédé céramique est exécuté dans l'intervalle de température entre 1 200 et 1 600 ° C.

**34.** Procédé selon une ou plusieurs des revendications 23 à 33, caractérisé en ce qu'on fait agir un gaz fluoré sur les briques cuites, à des températures situées entre 700 et 1 000 ° C, notamment entre 800 et 900 ° C et qu'il se forme, sur les surfaces accessibles au fluor gazeux, des cristaux en aiguilles de $TiO_2$ et/ou contenant du $TiO_2$, feutrés les uns avec les autres.

**35.** Procédé selon la revendication 34, caractérisé en ce qu'on utilise du fluorure de sodium en tant que gaz fluoré.

**36.** Procédé selon la revendication 34 ou 35, caractérisé en ce que l'action a lieu in situ dans le revêtement du four d'électrolyse.

**37.** Procédé selon la revendication 34 et/ou 35, caractérisé en ce que l'alimentation de fluor gazeux est exécutée après la cuisson des briques.

**38.** Procédé selon la revendication 37, caractérisé en ce que l'alimentation de fluor gazeux est exécutée dans le four de cuisson céramique aussitôt après la cuisson.

**39.** Procédé selon une ou plusieurs des revendications 23 à 38, caractérisé en ce qu'on utilise, comme matière première pour le composant $Al_2O_3$, au moins en partie, un matériau selon l'invention qui provient d'un four d'électrolyse en tant que matériau recyclé.

**40.** Cuve à électrolyse pour la fabrication d'aluminium métallique par électrolyse à partir d'oxyde d'aluminium dissous dans un bain fondu de fluorure, caractérisée par un revêtement isolant thermique résistant au fluor gazeux, présentant une construction par couches formée d'au moins deux couches (10, 11) de briques réfractaires isolantes thermiques cuites par un procédé céramique, la couche 10 étant une couche d'arrêt du bain fondu et la couche 11 étant composée de briques selon une ou plusieurs des revendications 1 à 22, qui sont fabriquées de préférence par un procédé selon une ou plusieurs des revendications 23 à 39.

**41.** Cuve d'électrolyse selon la revendication 40, caractérisée en ce que les couches (10, 11) sont disposées sous les cathodes et la couche (11) recouvre largement les joints de la couche (10).

**42.** Cuve d'électrolyse selon la revendication 40 et/ou 41, caractérisée en ce que les briques réfractaires de la couche de briques (10) présentent environ 18 à 48 % en poids de $Al_2O_3$ et sont résistantes à la cryolite fondue et à l'aluminium fondu.

**43.** Cuve d'électrolyse selon une ou plusieurs des revendications 40 à 42, caractérisée en ce que la longueur des formats de briques de la couche (11) est de 1,5 fois la longueur des formats de briques de la couche (10), la largeur des formats de briques de la couche (11) est de 2 fois la largeur des formats de briques de la couche (10), et l'épaisseur des formats de briques de la couche (11) correspond à plus d'une fois l'épaisseur des formats de briques de la couche (10), les briques étant disposées selon un motif en Z, de sorte que les joints (12) de la couche (10) sont recouverts et que les joints (13) de la couche (11) croisent uniquement les joints (12) de la couche (10).

**44.** Cuve d'électrolyse selon une ou plusieurs des revendications 40 à 43, caractérisée en ce que la couche (10) comprend des formats de briques ayant les dimensions suivantes :
longueur 200 mm - largeur 100 mm - épaisseur 40 mm
ou
longueur 100 mm - largeur 100 mm - épaisseur 40 mm
et la couche (11) comprend des formats de briques ayant les dimensions suivantes :
longueur 300 mm - largeur 200 mm - épaisseur 64 mm
ou
longueur 200 mm - largeur 100 mm - épaisseur 64 mm
ou
longueur 100 mm - largeur 100 mm - épaisseur 64 mm
les briques étant disposées selon un motif en Z, de sorte que les joints (12) de la couche (10) sont recouverts et que les joints (13) de la couche (11) croisent uniquement les joints (12) de la couche (10).

FIG.1

FIG.2a

FIG.2b

FIG.2c

Fig 3